(19) Europäisches Patentamt
European Patent Office
Office européen des brevets

(11) **EP 2 531 713 B1**

(12) **FASCICULE DE BREVET EUROPEEN**

(45) Date de publication et mention de la délivrance du brevet:
**20.09.2017 Bulletin 2017/38**

(21) Numéro de dépôt: **11707691.9**

(22) Date de dépôt: **02.02.2011**

(51) Int Cl.:
***F02D 41/00*** *(2006.01)*

(86) Numéro de dépôt international:
**PCT/FR2011/050208**

(87) Numéro de publication internationale:
**WO 2011/101571 (25.08.2011 Gazette 2011/34)**

(54) **PROCEDE DE DESENSIBILISATION DE LA BOUCLE D'ADMISSION D'AIR D'UN MOTEUR THERMIQUE AUX PERTURBATIONS DE LA BOUCLE EGR**

**VERFAHREN ZUR DESENSIBILISIERUNG DES LUFTEINTRITTSDESKREISES EINER WÄRMEKRAFTMASCHINE HINSICHTLICH DER STÖRUNGEN DES AGR-KREISLAUFES**

**METHOD FOR DESENSITIZING THE AIR ADMISSION LOOP OF A HEAT ENGINE TO THE PERTURBATIONS OF THE EGR LOOP**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.02.2010 FR 1050807**

(43) Date de publication de la demande:
**12.12.2012 Bulletin 2012/50**

(73) Titulaire: **PSA Automobiles SA**
**78300 Poissy (FR)**

(72) Inventeur: **DUBOIS, Laurent**
**F-91430 Igny (FR)**

(74) Mandataire: **Laurin, Ghislain Nicolas**
**PSA Automobiles SA**
**VPIB - LG081**
**18 rue des Fauvelles**
**92250 La Garenne Colombes (FR)**

(56) Documents cités:
**EP-A2- 0 849 452          DE-A1-102004 062 359**
**FR-A1- 2 872 220          FR-A1- 2 873 410**
**US-A1- 2007 209 362**

**Description**

La présente invention revendique la priorité de la demande française 1050807 déposée le 05 Février 2010.

La présente invention concerne un procédé de désensibilisation du débit d'air admis dans les cylindres d'un moteur thermique muni d'une boucle de recirculation des gaz d'échappement (boucle EGR), désensibilisation vis-à-vis des variations de débit des gaz d'échappement traversant la vanne EGR. La publication de demande de brevet US2007/209362 A1 divulgue un procédé de contrôle d'un moteur à combustion avec un système EGR utilisant un modèle.

Le respect des normes anti-pollution des moteurs thermiques a conduit les constructeurs automobiles à équiper les véhicules à moteur thermique, surtout les moteurs Diesel, d'une boucle de recirculation des gaz d'échappement (boucle appelée "boucle EGR"). Une partie des gaz d'échappement est prélevée dans la ligne d'échappement pour être dirigée dans la ligne d'admission d'air frais. Le mélange air frais - gaz d'échappement est ensuite injecté dans les cylindres par l'intermédiaire du répartiteur. La boucle EGR comporte principalement une vanne pilotée qui permet de doser la quantité des gaz d'échappement à mélanger à l'air frais.

Au cours de la mise au point du moteur, on calibre des points de fonctionnement stabilisé (régime du moteur et couple). Les valeurs de ces paramètres sont choisies de façon à respecter un agrément de conduite du véhicule, une consommation de carburant prédéterminée et les normes de pollution en vigueur. Il est donc important de pouvoir contrôler rigoureusement les débits d'air frais et des gaz d'échappement recirculés de façon à s'assurer que la richesse du mélange (air frais + gaz d'échappement recirculés + carburant) injecté dans les cylindres permettra de respecter les conditions de couple et de régime moteur aux différents points de fonctionnement stabilisé.

L'air frais est prélevé à l'extérieur à l'aide d'un compresseur lorsque le véhicule est équipé d'un turbocompresseur et le débit est mesuré à l'aide d'un débitmètre placé dans la ligne d'admission.

Le débit des gaz d'échappement recirculés est ajusté à l'aide d'une vanne, appelée vanne EGR, qui peut être par exemple une soupape ou une vanne à clapet. La position de l'obturateur de vanne permet de définir le débit des gaz recirculés. Cependant la position de l'obturateur de vanne n'est pas toujours contrôlée avec suffisamment d'exactitude. De plus, du fait des variations de pression qui s'exerce sur l'obturateur (variation de la différence de pression aux bornes de la vanne), l'obturateur peut osciller et il en résulte des variations du débit de gaz recirculés, ce qui conduit à une variation du débit d'air, à des variations de la richesse du mélange injecté dans les cylindres, et donc à des variations de couple moteur et des émissions polluantes, notamment des oxydes d'azote (NOx) et de particules.

De nombreux procédés ont déjà été proposés pour contrôler le débit des gaz d'échappement recirculés. On peut par exemple citer le procédé décrit dans le brevet FR 2 872 220. Selon ce procédé, on commande le débit des gaz recirculés en fonction d'au moins trois paramètres : la pression dans le répartiteur d'admission, la pression avant la turbine du turbocompresseur et la température des gaz avant la turbine. Dans l'ensemble, ces procédés déploient un contrôle qui vise à réguler le débit d'air en définissant une consigne vers la boucle EGR pilotée. Ce contrôle de la boucle EGR commande l'actionneur de l'obturateur de la vanne EGR afin d'atteindre cette consigne. La maitrise du débit d'air est assurée exclusivement par les performances des différentes boucles de régulation. Les caractéristiques physiques, telles que les pertes de charge ou la progressivité de la boucle EGR, ne sont pas intégrées dans le processus de maitrise du débit d'air, ce qui peut conduire à l'utilisation de capteurs complémentaires (et donc à une augmentation des coûts), à un travail important de mise au point des régulateurs et, éventuellement, à un besoin identifié tardivement d'un changement d'un ou plusieurs organes, tels que la vanne EGR par exemple.

La présente invention concerne un procédé qui ne présente pas ces inconvénients de l'art antérieur, la quantité d'air injecté dans les cylindres étant rendu insensible aux fluctuations se produisant dans la boucle EGR, ce qui permet de maitriser la richesse du mélange injecté dans les cylindres.

De façon plus précise, l'invention concerne un procédé de désensibilisation du débit d'air $Q_{air}$ admis dans les cylindres d'un moteur thermique, muni d'une boucle EGR comprenant une vanne EGR, désensibilisation vis-à-vis de variations $\Delta Q_{egr}$ de débit de gaz $Q_{egr}$ traversant la vanne EGR, procédé selon lequel des points de fonctionnement stabilisé du moteur sont définis en fonction de besoins prédéterminés, des valeurs de $Q_{air}$, $Q_{egr}$ et de variations maximales admissibles de débit d'air $\Delta Q_{air}$ étant associées à au moins un ensemble desdits points de fonctionnement stabilisé, ledit procédé étant caractérisé par les étapes suivantes :

• détermination des variations $\Delta Q_{egr}$ maximales admissibles pour au moins une partie desdits points de fonctionnement stabilisé,

• détermination des variations de section efficace $\Delta Seff$ admissibles de la vanne EGR en fonction desdites variations $\Delta Q_{egr}$ maximales admissibles,

• détermination de la progressivité de la vanne EGR, et

• comparaison de ladite progressivité avec les caractéristiques de ladite vanne EGR.

De préférence, lesdits besoins peuvent concerner la consommation de carburant, les limites admissibles d'émissions polluantes et l'agrément de conduite et lesdites émissions polluantes peuvent concerner au moins un oxyde d'azote NOx et/ou des particules.

Si le résultat de ladite comparaison de ladite progressivité avec les caractéristiques de ladite vanne EGR montre que ladite progressivité ne peut pas être obtenue avec ladite vanne EGR pour au moins une partie des points de fonctionnement stabilisé, alors:

- les points de fonctionnement stabilisé de ladite partie sont modifiés de façon à obtenir un accord entre ladite progressivité et les caractéristiques de ladite vanne EGR, et/ou

- une vanne EGR est définie ayant des propriétés de progressivité compatibles avec ladite progressivité déterminée.

D'autres avantages et caractéristiques de l'invention apparaîtront au cours de la description qui suit d'un mode de réalisation de l'invention, donné à titre d'exemple non limitatif, en référence aux dessins annexés et sur lesquels :

- la figure 1 représente schématiquement une architecture fonctionnelle d'un moteur Diesel ;

- la figure 2 représente l'oscillation de la position de l'obturateur d'une vanne EGR autour d'une position de consigne stabilisée ;

- la figure 3 représente un exemple de relation entre la position de l'obturateur de la vanne et sa section efficace ;

- la figure 4 illustre le compromis entre la conception de la vanne et celle de son contrôle pour garantir une même variation de débit EGR ;

- la figure 5 est un organigramme illustrant le déroulement des différentes étapes du procédé de l'invention ;

- la figure 6 représente les variations limites admissibles de la section efficace en fonction de la section efficace ;

- la figure 7 est une courbe représentant la section efficace d'une vanne EGR en fonction de la position de l'obturateur de vanne ;

- la figure 8 est une comparaison entre les variations limites admissibles de la figure 6 et la section efficace (figure 7) qui caractérise la vanne ;

- la figure 9 montre deux courbes, représentant la section efficace en fonction de la position de l'obturateur, d'une part pour la vanne concernée par la figure 7 et, d'autre part, pour la même vanne mais après avoir modifié son dessin pour la rendre plus progressive ; et

- la figure 10 représente les variations de section efficace en fonction de la section efficace, d'une part, pour la vanne de la figure 8 et, d'autre part, pour la même vanne après modification de son dessin (vanne de la figure 9).

Les dessins annexés pourront non seulement servir à compléter l'invention, mais aussi contribuer à sa définition, le cas échéant.

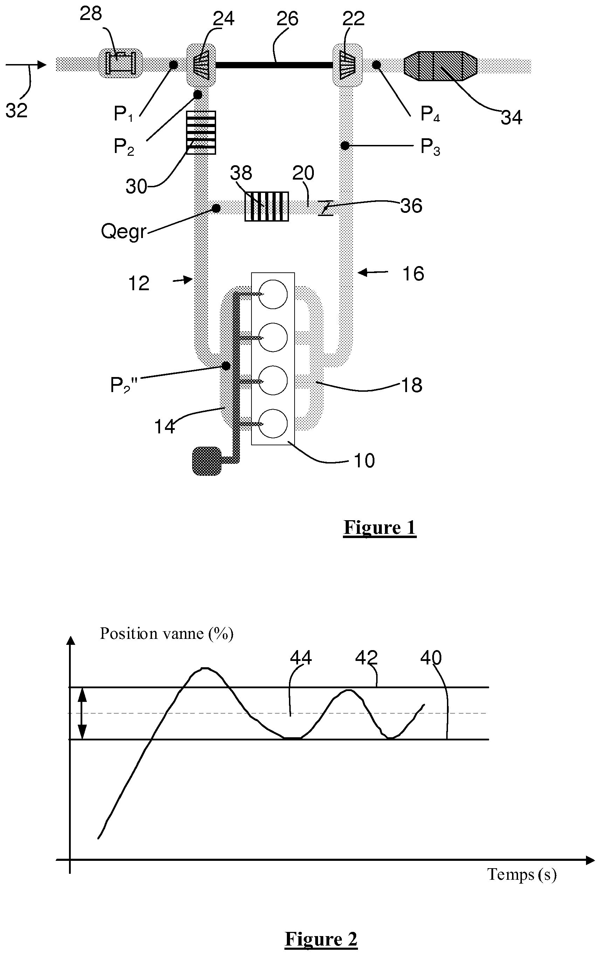

L'architecture fonctionnelle d'un moteur Diesel représentée sur la figure 1 comporte un moteur thermique 10, une ligne 12 d'admission d'air avec un répartiteur 14, une ligne d'échappement 16 avec un collecteur d'échappement 18 et une boucle EGR 20. Le moteur est muni d'un turbocompresseur composé d'une turbine 22 placée dans la ligne d'échappement 16 et d'un compresseur 24 placé dans la ligne d'admission d'air 12, la turbine et le compresseur étant reliés par un arbre 26. La ligne d'admission 12 comporte un filtre à air (non représenté), un débitmètre 28, le compresseur 24 et un échangeur thermique 30. L'air frais est aspiré de l'extérieur du véhicule comme indiqué par la flèche 32.

La ligne des gaz d'échappement 16 comporte le collecteur 18, la turbine 22 et un pot catalytique 34.

La boucle EGR 20 comporte une vanne EGR 36, qui peut être par exemple une soupape ou une vanne à clapet, et éventuellement un échangeur thermique 38. La vanne EGR 36 est munie d'un obturateur dont la position est commandée à l'aide d'un actionneur, lequel est piloté par un calculateur. Par la suite et dans les dessins, l'expression « ouverture de la vanne » désigne l'ouverture de l'obturateur de la vanne EGR et l'expression « position de la vanne » désigne la position de l'obturateur ou de l'actionneur de la vanne EGR.

Sont présentées sur la figure 1, les pressions $P_1$, $P_2$, $P''_2$, $P_3$ et $P_4$ qui participent à l'invention. Seule, la pression $P''_2$ est mesurée par l'intermédiaire d'un capteur. Le débit des gaz recyclé dans la boucle EGR est indiqué par $Q_{egr}$. Les grandeurs non mesurées sont usuellement estimées.

Afin d'obtenir les proportions voulus pour le mélange (air frais + gaz d'échappement recyclés + carburant), et donc pour obtenir la richesse souhaitée du mélange, il est nécessaire de contrôler rigoureusement le débit d'air frais $Q_{air}$ et le débit $Q_{egr}$. Ce dernier est déterminé notamment par la position de l'obturateur de la vanne EGR 36. Cependant, la différence des pressions qui s'exercent entre l'amont et l'aval de l'obturateur fluctue (notamment à cause des variations de pression dans les cylindres). Il en résulte que l'obturateur de vanne a tendance à osciller, ce qui entraine des variations de débits non contrôlées dans la boucle EGR.

La figure 2 illustre ce phénomène en représentant la position de la vanne (en % de son ouverture maximale) dans le temps. On remarque que l'obturateur oscille entre deux positions extrêmes 40 et 42, autour d'une position de consigne 44. Les oscillations de l'obturateur provoquent des variations de débit dans la boucle EGR et donc des variations du rapport des débits d'air $Q_{air}$ et de gaz recyclés $Q_{egr}$ aspirés dans les cylindres. Ces variations modifient les rejets nocifs tels que les oxydes d'azote NOx et les particules. Il est donc important de maitriser les fluctuations du débit $Q_{egr}$. Pour ce faire, il est établi lors de la conception ou lors de la calibration du moteur une exigence sur la variation maximale admissible du débit d'air $\Delta Q_{air}$.

Pour une vanne déterminée, on définit habituellement une section efficace qui désigne la section de passage qui module le passage du gaz à travers la vanne. La section efficace Seff module le débit $Q_{egr}$ et peut être exprimée par une équation du type:

$$Q_{egr} = Seff * f(\text{différence de pression entre amont et aval de la vanne, température des gaz, etc...})$$

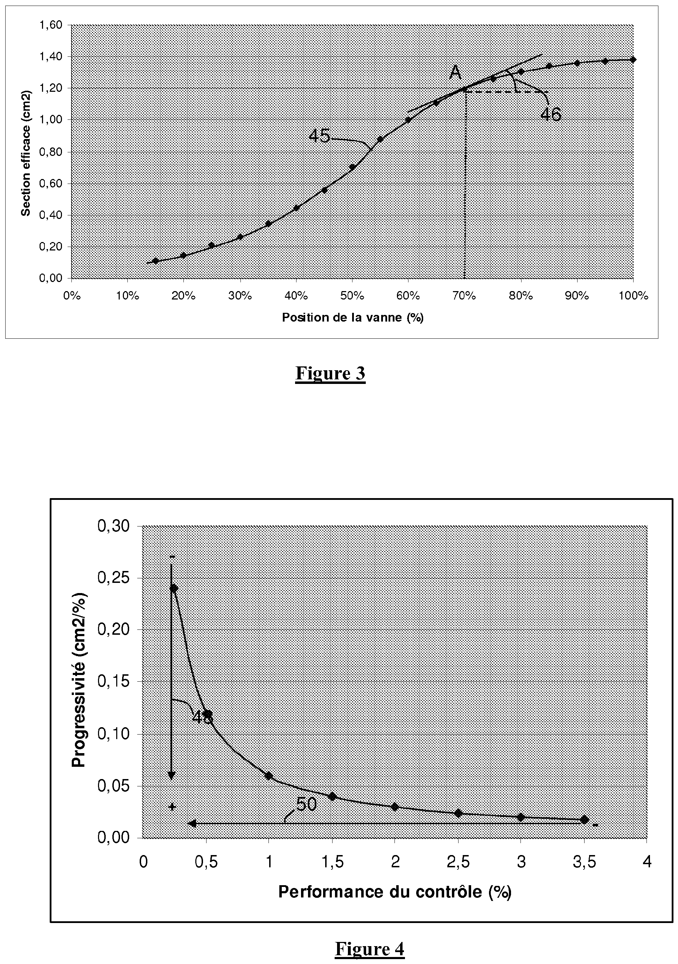

La figure 3 est une courbe 45 illustrant la section efficace Seff d'une vanne EGR en fonction de la position de l'obturateur (ou de l'actionneur, ce qui revient au même). On remarque que la variation de section efficace n'est pas linéaire.

Il est intéressant de définir la progressivité de la vanne EGR pour une position donnée de l'obturateur; la progressivité étant alors égale à la pente de la courbe représentant la section efficace en fonction de la position de l'obturateur de vanne EGR. Par exemple, sur la figure 3, la progressivité au point A (Seff = 1,19 cm$^2$ et position de la vanne = 70%), la progressivité est représentée par la tangente de l'angle 46. Dans l'exemple de la figure 3, la progressivité est relativement faible pour des valeurs de position de vanne supérieures à 70% et inférieures à 30%. On remarque que, pour obtenir une variation déterminée de Seff, plus la progressivité est faible, plus il faut déplacer l'actionneur de l'obturateur de vanne.

Il a déjà été mentionné en décrivant la figure 2 que la position de l'obturateur a tendance à osciller. La figure 4 représente la progressivité de la vanne EGR (en cm$^2$/%) en fonction de la performance du contrôle (en %) de la position de l'obturateur, c'est-à-dire en fonction du pourcentage de variation de la position de l'obturateur par rapport à une position de consigne déterminée. La figure 4 illustre le compromis nécessaire entre la progressivité de la vanne EGR et la performance de la régulation pour garantir une même variation de débit $Q_{egr}$. L'effort nécessaire sur la conception organique de la vanne EGR (dessin de la vanne, maîtrise des dispersions de fabrication, ...) est indiqué par la flèche 48 (l'effort augmentant du - au +), alors que l'effort nécessaire sur la conception du contrôle (loi de commande, capteurs et mise au point) est indiqué par la flèche 50. Il y a donc un compromis à atteindre entre la conception de la vanne EGR et celle de son contrôle pour garantir une même variation de débit $Q_{egr}$. En d'autres termes, pour un besoin donné (une variation de Seff maximale admissible), on peut soit améliorer la performance du contrôle de l'actionneur de la vanne EGR, soit réaliser une vanne ayant une progressivité de faible valeur (l'ouverture et la fermeture de l'obturateur étant alors très progressive).

La variation de section efficace $\Delta$Seff dépend de la progressivité de la vanne et de l'amplitude des oscillations de la position de l'obturateur autour de la position de consigne. Une variation maximale déterminée $\Delta$Seff peut être obtenue, soit par un contrôle de position de l'obturateur extrêmement performant si la progressivité de la vanne a une forte valeur, soit en relâchant les contraintes sur le contrôle de position si la progressivité a une faible valeur.

Pour garantir le respect des normes relatives aux émissions, il est établi, lors de la conception ou lors de la calibration du moteur, un ensemble d'exigences sur les variations maximales admissibles $\Delta Q_{air}$ du débit d'air en fonction des modes de fonctionnement du moteur (régime, charge, température,...). Le besoin initial s'exprime donc en une limite admissible de la variation du débit d'air $Q_{air}$ mesuré par le débitmètre 28. Selon une caractéristique du procédé de l'invention, cette variation limite $\Delta Q_{air}$ est ensuite traduite en variation maximale admissible du débit EGR, $\Delta Q_{egr}$, puis en variation maximale admissible $\Delta$Seff de la section efficace de la vanne EGR.

On peut démontrer que, localement, les variations des débits d'air ($\Delta Q_{Air}$) et d'EGR ($\Delta Q_{egr}$) sont reliées par la relation suivante (équation 1):

$$\Delta Q_{egr} = \Delta Q_{air}\left(-1+\frac{\gamma a}{\gamma a-1}\frac{P_2}{P_2^{"}}\frac{Q_{air}+Q_{egr}}{Q_{air}}\frac{rc-1}{rc}\left(\frac{1}{1+14{,}38\phi}\frac{2+rt}{2-rt}-\frac{r_C\left(1+\frac{PdC}{P_2}\frac{\gamma a-1}{\gamma a}\right)-1}{rc-1}\right)\right)$$

Equation (1) dans laquelle :

$$rc = \left(\frac{P_2}{P_1}\right)^{\frac{\gamma a-1}{\gamma a}}$$ est le ratio des pressions aval et amont de l'étage de compression du turbocompresseur, $\gamma$ étant

le rapport des chaleurs spécifiques à pression constante et à volume constant.

$$rt = \left(\frac{P_4}{P_3}\right)^{\frac{\gamma e-1}{\gamma e}}$$ est le ratio des pressions aval et amont de la turbine du turbocompresseur,

$\gamma_a$ et $\gamma_e$ sont respectivement les rapports de chaleur spécifique de l'air et du gaz d'échappement,

$\Phi$ est la richesse du mélange air / carburant pour le point de fonctionnement stabilisé considéré,

$Q_{air}$ et $Q_{egr}$ sont respectivement les débits d'air et d'EGR pour le point stabilisé considéré,

PdC est la valeur des pertes de charges entre la sortie du compresseur et le répartiteur (dont l'échangeur), et donc égale à $P_2 - P_2"$,

$P_2"$ et $P_2$ sont respectivement les pressions dans le répartiteur d'admission et à la sortie du compresseur (voir figure 1).

De même, on démontre que la relation reliant les variations du débit d'EGR ($\Delta Q_{egr}$) aux variations de section efficace de la boucle EGR ($\Delta S_{eff}$) est donnée par l'équation (2) suivante:

$$\frac{\Delta Q_{egr}}{Q_{egr}}\left(1-2k\frac{PdC_{Aval}}{P_2^{"}+PdC_{Aval}}+2(1-k)\frac{PdC_{Amont}}{P_3-PdC_{Amont}}\right)-k\frac{\Delta P_2^{"}}{P_2^{"}+PdC_{Aval}}-(1-k)\frac{\Delta P_3}{P_3-PdC_{Amont}}=\frac{\Delta S_{eff}}{S_{eff}}$$

Equation (2) dans laquelle

$$rv = \left(\frac{P_2"+PdC_{Aval}}{P_3-PdC_{Amont}}\right)^{\frac{\gamma e-1}{\gamma e}}$$ est le ratio des pressions aval et amont de la boucle EGR,

$$k = \frac{2-(\gamma e+1)rv}{2\gamma e(1-r)v}$$ est une variable intermédiaire,

$PdC_{Aval}$ et $PdC_{Amont}$ sont respectivement les pertes de charge en aval et en amont de la boucle EGR,

$\Delta P_2"$ et $\Delta P_3$ sont respectivement les variations des pressions $P"_2$ et $P_3$ occasionnées par une variation de la section efficace de la boucle EGR.

Ces équations montrent qu'en partant d'un besoin initial sur $\Delta Q_{air}$, il est possible de traduire ce besoin en un besoin sur $\Delta Q_{egr}$ à l'aide de l'équation (1), puis en besoin sur $\Delta Seff$ à l'aide de l'équation (2).

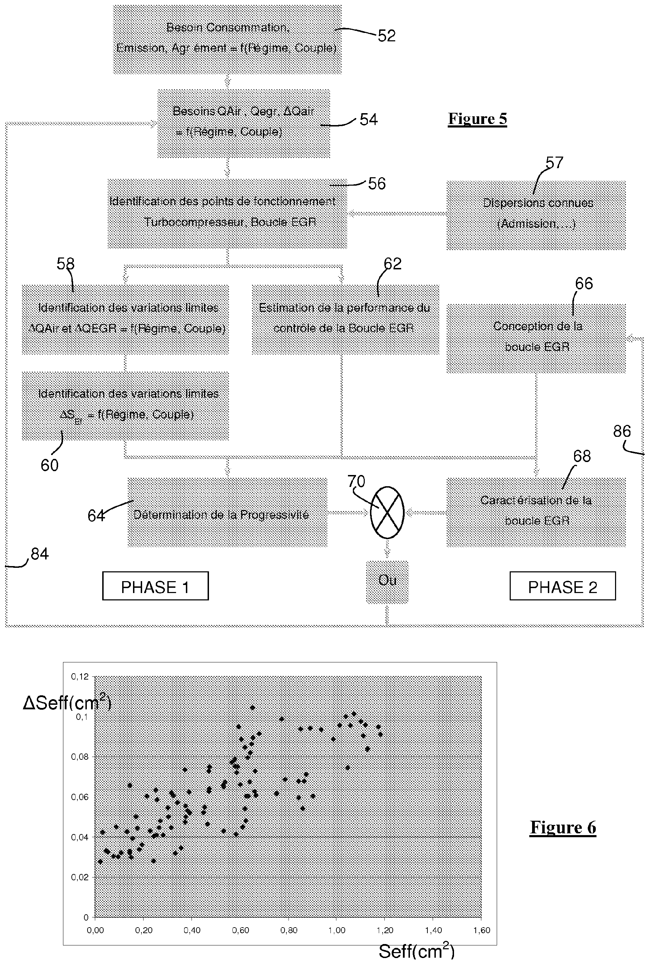

L'objectif de l'invention étant de garantir la stabilité du débit d'air $Q_{air}$ vis-à-vis des variations du débit EGR, $Q_{egr}$, pour pratiquement tous les points de fonctionnement stabilisé du moteur, il est proposé le procédé illustré par l'organigramme de la figure 5.

La première étape, qui est une étape de calibration, consiste à définir des points de fonctionnement stabilisé en termes de consommation de carburant, d'agrément de conduite et d'émission polluante maximale en fonction des normes anti-pollution (référence 52 sur la figure 5).

Les conditions exprimées pour chaque point stabilisé se traduisent par un besoin en termes de débit d'air $Q_{air}$, de débit de gaz recirculés $Q_{egr}$ et de variation maximale admissible sur le débit d'air $\Delta Q_{air}$, ce besoin dépendant du régime moteur et du couple (référence 54).

Afin d'obtenir les débits d'air et EGR souhaités, on détermine (référence 56) les points de fonctionnement du turbocompresseur (différence de pression aux bornes du compresseur) et de la boucle EGR (position de consigne de l'actionneur de la vanne EGR). Pour cela, on peut tenir compte des dispersions connues (référence 57) sur les différents paramètres des équations (1) et (2).

A l'étape suivante (58), on identifie les variations limites de débit dans la boucle EGR, $\Delta Q_{egr}$ à partir de l'équation (1).

Ensuite on détermine les variations maximales admissibles $\Delta Seff$ de la section efficace de la vanne EGR en fonction du régime moteur et du couple, à l'aide de l'équation (2) (référence 60). La figure 6, qui représente la variation (en $cm^2$) de section efficace $\Delta Seff$ en fonction de la section efficace $Seff$ (en $cm^2$), montre le résultat obtenu en fonction des besoins exprimés. Cette figure identifie les variations limites admissibles de la section efficace. Parallèlement aux étapes 58 et 60, on estime la performance du contrôle de la boucle EGR (référence 62).

A partir de la variation $\Delta Seff$ de section efficace de la vanne EGR et des fluctuations de la position de l'actionneur autour de la position de consigne (performance du contrôle), on peut déterminer la progressivité (référence 64). La figure 4 représente la progressivité de la vanne EGR en fonction de la performance du contrôle pour un même besoin de variation de $\Delta Seff$.

Les étapes 52 à 64 constituent une première phase qui a pour but de déterminer le besoin, et plus précisément la progressivité nécessaire de la vanne EGR.

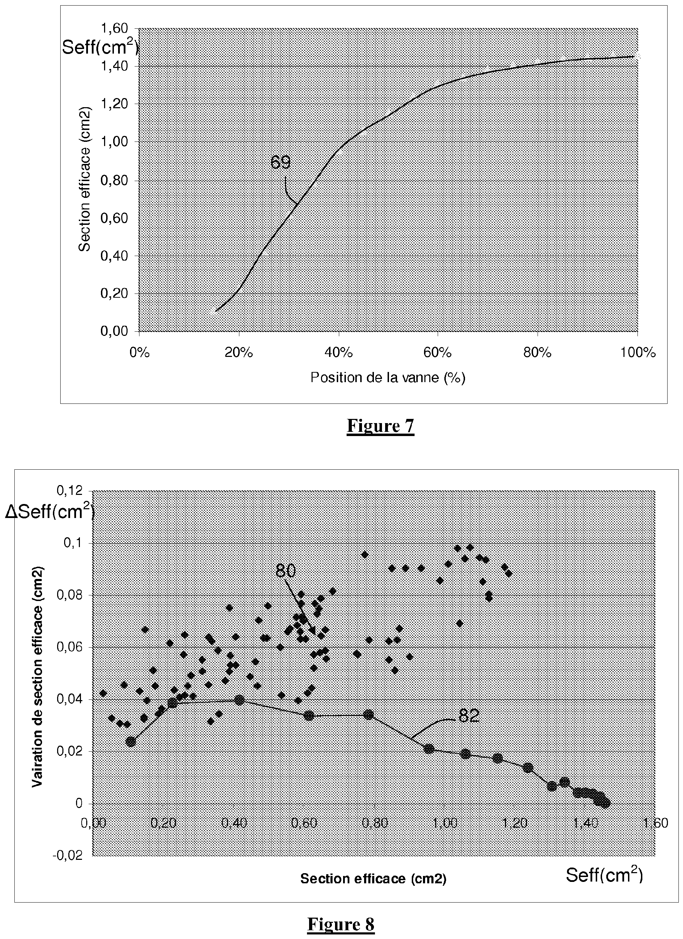

Dans une deuxième phase (références 66 et 68), on tient compte des caractéristiques de la vanne EGR utilisée, notamment de la section efficace $Seff$ en fonction de la position de l'actionneur. La figure 7 est une courbe 69 représentant la section efficace $Seff$ (en $cm^2$) de la vanne EGR en fonction de l'ouverture (ou position) de la vanne (en % de la pleine ouverture qui est égale à 100%).Le pourcentage d'ouverture est donné par la position de l'actionneur de l'obturateur. De façon générale, cette figure caractérise la boucle EGR. La figure 7, qui correspond à un premier dessin de la vanne, est obtenue par des essais sur banc effectués habituellement par le concepteur ou le fabricant de la vanne. On remarque que la progressivité de la vanne peut être obtenue en prenant, pour chaque position de la vanne, la dérivée (donc la pente) de la courbe 69 de la figure 7.

L'étape suivante du procédé illustré sur la figure 5 consiste à comparer (référence 70), la progressivité dont on a besoin, déterminée à l'issue de la première phase (référence 64), avec la progressivité réelle de la vanne EGR déterminée par la deuxième phase (références 66 et 68) à l'aide de données du constructeur. La figure 8 illustre la comparaison entre le besoin de progressivité (figure 6) et la caractérisation de la vanne EGR (figure 7) en cohérence avec la performance du contrôle de position de l'actionneur. Elle montre la variation de section efficace $\Delta Seff$ en fonction de la section efficace $Seff$. Les points 80 en forme de petit carré sont issus de la figure 6 et représentent le besoin de progressivité alors que les points en forme de cercle (courbe 82) sont déduits de la figure 7 et représentent la progressivité de la vanne EGR. On remarque que dans la zone située approximativement entre 0,20 et 0,40 de section efficace, la progressivité de la vanne (courbe 82) n'est pas compatible avec le besoin de progressivité exprimée par les points en forme de petit carré (des points 80 sont en effet situés sous la courbe 82 ou trop proches de cette courbe). Dans ce cas, après l'étape de comparaison 70, on réitère la phase 1 (flèche 84) en analysant à nouveau les besoins de débit d'air et de débit de gaz EGR et si possible les points de fonctionnement stabilisés du moteur sont modifiés(en respectant cependant les normes anti-pollution) jusqu'à ce que l'on aboutisse à un besoin de progressivité compatible avec la progressivité de la vanne EGR. Si ce n'est pas possible, on revient alors à la phase 2, c'est-à-dire à l'étape de conception de la vanne (flèche 86). En d'autres termes le dessin de la vanne EGR est modifié de façon à obtenir la progressivité voulue. Selon un autre mode de mise en oeuvre du procédé, on pourrait ne pas réitérer la phase 1 et passer directement à la phase 2.

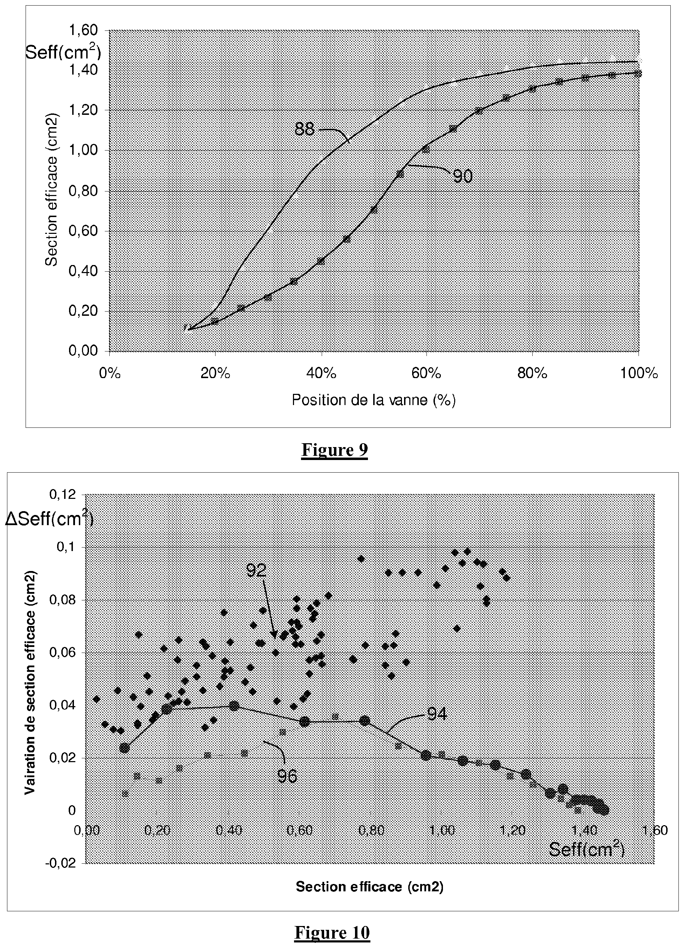

La figure 9 exprime la section efficace (en $cm^2$) de la vanne EGR en fonction de la position de l'actionneur de la vanne (en %). La courbe 88 concerne le dessin initial de la vanne (il s'agit de la courbe 69 de la figure 7) alors que la courbe 90 concerne la vanne dont on a modifié le dessin de façon à la rendre plus progressive pour des positions de l'actionneur de 10% jusqu'à environ 60%.

La figure 10 représente les variations de section efficace $\Delta Seff$ (en $cm^2$) en fonction de la section efficace $Seff$ (en $cm^2$), d'une part, pour les besoins de progressivité (points 92 en forme de losange, qui sont identiques aux points 80 de la figure 8) déterminés à l'aide des étapes 52 à 64 du procédé de la figure 5 et, d'autre part, pour la vanne EGR avec le dessin initial (courbe 94 identique à la courbe 82 de la figure 8) et pour la vanne dont le dessin a été modifié (courbe 96). On remarque que la progressivité de la vanne redessinée (courbe 96) est compatible avec les besoins de progressivité indiqués par les points 92. La figure 10 permet donc de vérifier que la vanne au dessin modifié satisfait le besoin de progressivité (la courbe 96 est en effet en dessous des points 92).

Lorsque le procédé est mis en oeuvre avant le début de la mise au point du moteur, on peut ainsi déterminer à l'avance si la vanne EGR permettra de respecter le besoin exprimé en termes de régime moteur, de couple et de normes anti-pollution. On évite ainsi une mise au point du moteur qui se serait révélée laborieuse, voir même impossible, ou une modification tardive des caractéristiques de la boucle EGR. On optimise ainsi les coûts concernant la vanne EGR, son actionneur et le capteur de débit de la boucle EGR pilotée, puisque les limites fonctionnelles sont clairement établies.

D'autres modes de réalisation que celui décrit et représenté peuvent être conçus par l'homme du métier sans sortir du cadre de la présente invention. Par exemple, le mode de réalisation décrit concerne un moteur Diesel, mais l'invention peut également s'appliquer à un moteur essence. En effet, dans une architecture classique de moteur essence, un "doseur d'air" (une vanne) est placé entre l'échangeur 30 (figure 1) et le répartiteur 14 dans la ligne d'admission12. Pour un moteur Diesel, ce "doseur" est remplacé par une vanne de type papillon, qui est maintenue la plupart du temps en position complètement ouverte (de façon à ne pas pénaliser la consommation), alors que la position du "doseur" des moteurs essence est souvent modifiée. Pour la mise en oeuvre du procédé de l'invention à des moteurs essence, les exigences entre le doseur et la boucle EGR pilotée doivent alors être couplés.

On peut également tenir compte des échanges thermiques tels que les évolutions des températures d'air d'admission et de l'efficacité des échangeurs. Dans ce cas, l'évolution des échanges thermiques peut être considérée comme une perturbation ou une dispersion qui peut être intégrée dans le calcul des limites de variation de section efficace de la boucle EGR.

## Revendications

1. Procédé tendant à rendre le débit d'air $Q_{air}$ admis dans les cylindres d'un moteur thermique (10), muni d'une boucle EGR (20) comprenant une vanne EGR (36), insensible vis-à-vis de variations $\Delta Q_{egr}$ de débit de gaz Qegr traversant la vanne EGR du fait des variations de la différence de pression aux bornes de la vanne EGR pouvant conduire à des variations de la richesse du mélange injecté dans les cylindres, et donc à des variations de couple moteur et des émissions polluantes, procédé selon lequel des points de fonctionnement stabilisé du moteur sont définis en fonction de besoins prédéterminés, des valeurs de $Q_{air}$, $Q_{egr}$ et de variations maximales admissibles de débit d'air $\Delta Q_{air}$ étant associées à au moins un ensemble desdits points de fonctionnement stabilisé, ledit procédé étant **caractérisé par** les étapes suivantes :

   • détermination des variations $\Delta Q_{egr}$ maximales admissibles pour au moins une partie desdits points de fonctionnement stabilisé,
   • détermination des variations de section efficace $\Delta Seff$ admissibles de la vanne EGR en fonction desdites variations $\Delta Q_{egr}$ maximales admissibles,
   • estimation de la performance du contrôle de la boucle EGR ;
   • détermination de la progressivité nécessaire de la vanne EGR, la progressivité étant égale à la pente de la courbe représentant la section efficace en fonction de la position de l'obturateur de vanne EGR;
   • comparaison de ladite progressivité avec les caractéristiques de ladite vanne EGR, et
   • si le résultat de ladite comparaison de ladite progressivité avec les caractéristiques de ladite vanne EGR montre que ladite progressivité ne peut pas être obtenue avec ladite vanne EGR pour au moins une partie des points de fonctionnement stabilisé, les points de fonctionnement stabilisé de ladite partie sont alors modifiés de façon à obtenir un accord entre ladite progressivité et les caractéristiques de ladite vanne EGR

2. Procédé selon la revendication 1 **caractérisé en ce que** lesdits besoins concernent la consommation de carburant, les limites admissibles d'émissions polluantes et l'agrément de conduite.

3. Procédé selon la revendication 2 **caractérisé en ce que** lesdites émissions polluantes concernent au moins l'un des polluants suivants : un oxyde d'azote NOx et des particules.

4. Procédé selon l'une des revendications précédentes **caractérisé en ce que**, si le résultat de ladite comparaison de ladite progressivité avec les caractéristiques de ladite vanne EGR montre que ladite progressivité ne peut pas être obtenue avec ladite vanne EGR pour au moins une partie des points de fonctionnement stabilisé et si la modification des points de fonctionnement stabilisé n'est pas possible, une vanne EGR est définie ayant des propriétés de progressivité compatibles avec ladite progressivité déterminée.

5. Procédé selon l'une des revendications précédentes **caractérisé en ce que** lesdites variations $\Delta Q_{egr}$ maximales admissibles sont déterminées à l'aide d'une équation du type:

$$\Delta Q_{egr} = \Delta Q_{air} \left( -1 + \frac{\gamma a}{\gamma a - 1} \frac{P_2}{P_2^{"}} \frac{Q_{air} + Q_{egr}}{Q_{air}} \frac{rc-1}{rc} \left( \frac{1}{1+14,38\phi} \frac{2+rt}{2-rt} - \frac{r_C\left(1+\frac{PdC}{P_2}\frac{\gamma a-1}{\gamma a}\right)-1}{rc-1} \right) \right)$$

dans laquelle :

$rc = \left(\frac{P_2}{P_1}\right)^{\frac{\gamma a-1}{\gamma a}}$ est le ratio des pressions aval et amont de l'étage de compression du turbocompresseur, $\gamma$ étant

le rapport des chaleurs spécifiques à pression constante et à volume constant,

$rt = \left(\frac{P_4}{P_3}\right)^{\frac{\gamma e-1}{\gamma e}}$ est le ratio des pressions aval et amont de la turbine du turbocompresseur,

$\gamma_a$ et $\gamma_e$ sont respectivement les rapports de chaleur spécifique de l'air et du gaz d'échappement,
$\Phi$ est la richesse du mélange air / carburant pour le point de fonctionnement stabilisé considéré, $Q_{air}$ et $Q_{egr}$ sont respectivement les débits d'air et d'EGR pour le point stabilisé considéré,
PdC est la valeur des pertes de charges entre la sortie du compresseur et le répartiteur (dont l'échangeur), et donc égale à $P_2 - P_2^{"}$,.
$P_2^{"}$ et $P_2$ sont respectivement les pressions dans le répartiteur d'admission et à la sortie du compresseur

**6.** Procédé selon l'une des revendications précédentes **caractérisé en ce que** lesdites variations de sections efficaces $\Delta Seff$ admissibles de la vanne EGR sont déterminées à l'aide d'une équation du type:

$$\frac{\Delta Q_{egr}}{Q_{egr}} \left(1 - 2k\frac{PdC_{Aval}}{P_2^{"} + PdC_{Aval}} + 2(1-k)\frac{PdC_{Amont}}{P_3 - PdC_{Amont}}\right) - k\frac{\Delta P_2^{"}}{P_2^{"} + PdC_{Aval}} - (1-k)\frac{\Delta P_3}{P_3 - PdC_{Amont}} = \frac{\Delta S_{eff}}{S_{eff}}$$

dans laquelle

$rv = \left(\frac{P_2^{"} + PdC_{Aval}}{P_3 - PdC_{Amont}}\right)^{\frac{\gamma e-1}{\gamma e}}$ est le ratio pressions aval et amont de la boucle EGR,

$k = \frac{2 - (\gamma e + 1)rv}{2\gamma e(1-r)v}$ est une variable intermédiaire,

$PdC_{Aval}$ et $PdC_{Amont}$ sont respectivement les pertes de charge en aval et en amont de la boucle EGR,
$\Delta P_2^{"}$ et $\Delta P_3$ sont respectivement les variations des pressions $P_2^{"}$ et $P_3$ occasionnées par une variation de la section efficace de la boucle EGR , $P_2^{"}$ étant la pression dans le répartiteur d'admission et $P_3$ étant la pression en amont de la turbine du turbocompresseur.

**7.** Procédé selon l'une des revendications précédentes **caractérisé en ce que** ladite étape de comparaison de ladite progressivité avec les caractéristiques de ladite vanne EGR est effectuée par comparaison de deux courbes représentant les variations de section efficace $\Delta Seff$ en fonction de la section efficace Seff, l'une desdites courbes résultant du besoin exprimé lors de la conception du moteur en fonction desdits points de fonctionnement et l'autre courbe résultant de la section efficace Seff en fonction de la position de l'actionneur de ladite vanne.

**8.** Procédé selon l'une des revendications précédentes **caractérisé en ce que** lesdites valeurs de $Q_{air}$, $Q_{egr}$ et de variations maximales admissibles de débit d'air $\Delta Q_{air}$ associées à au moins un ensemble desdits points de fonctionnement stabilisé sont déterminées par calibration du moteur ou lors de la conception du moteur.

**9.** Procédé selon la revendication 8 **caractérisé en ce que** lesdites valeurs de $Q_{air}$, $Q_{egr}$ et de variations maximales admissibles de débit d'air $\Delta Q_{air}$ sont déterminées en fonction des modes de fonctionnement du moteur.

**10.** Procédé selon la revendication 9 **caractérisé en ce que** lesdites valeurs de $Q_{air}$, $Q_{egr}$ et de variations maximales admissibles de débit d'air $\Delta Q_{air}$ sont déterminées en fonction d'au moins l'un des paramètres du moteur suivants:

le régime, la charge et la température.

**Patentansprüche**

1. Verfahren zur Desensibilisierung des Luftdurchsatzes $Q_{air}$, der in die Zylinder eines Verbrennungsmotors (10) eingelassen wird, der mit einer AGR-Schleife (20) versehen ist, die ein AGR-Ventil (36) umfasst, gegenüber Variationen $\Delta Q_{egr}$ von Gasdurchfluss $Q_{egr}$, der das AGR-Ventil durchquert, aufgrund der Variationen des Druckunterschieds an den Klemmen des AGR-Ventils, der zu Variationen der Reichhaltigkeit des Gemischs, das in die Zylinder eingespritzt wird, und daher gegenüber Motordrehmomentvariationen und Variationen der Schadstoffemissionen, Verfahren gemäß dem stabilisierte Betriebspunkte des Motors in Abhängigkeit von vorbestimmten Erfordernissen, der Werte von $Q_{air}$, $Q_{egr}$ und maximalen zulässigen Variationen des Luftdurchsatzes $\Delta Q_{air}$, die mit mindestens einer Einheit der stabilisierten Betriebspunkte assoziiert sind, definiert werden, Verfahren **gekennzeichnet durch** die folgenden Schritte:

   • Bestimmen der maximalen zulässigen Variationen $\Delta Q_{egr}$ für mindestens einen Teil der stabilisierten Betriebspunkte,
   • Bestimmen der zulässigen Wirkquerschnittvariationen $\Delta Seff$ des AGR-Ventils in Abhängigkeit von den maximalen zulässigen Variationen $\Delta Q_{egr}$,
   • Schätzen der Leistung der Steuerung der AGR-Schleife;
   • Bestimmen des erforderlichen Anstiegs des AGR-Ventils, wobei der Anstieg gleich dem Gefälle der Kurve ist, die den Wirkquerschnitt in Abhängigkeit von der Position des Verschlusses des AGR-Ventils darstellt;
   • Vergleichen des Anstiegs der Merkmale des AGR-Ventils, und
   • falls das Resultat des Vergleichs des Anstiegs mit den Merkmalen des AGR-Ventils aufzeigt, dass der Anstieg mit dem AGR-Ventil nicht mehr für mindestens einen Teil der stabilisierten Betriebspunkte erzielt werden kann, die stabilisierten Betriebspunkte des Teils derart geändert werden, dass eine Übereinstimmung mit dem Anstieg und den Merkmalen des AGR-Ventils erzielt wird.

2. Verfahren nach Anspruch 1, **dadurch gekennzeichnet, dass** die Erfordernisse den Kraftstoffverbrauch, die zulässigen Limits von Schadstoffemissionen und den Fahrkomfort betreffen.

3. Verfahren nach Anspruch 2, **dadurch gekennzeichnet, dass** die Schadstoffemissionen mindestens eine der folgenden Verschmutzungen betreffen: Stickstoffoxid NOx und Teilchen.

4. Verfahren nach einem der vorhergehenden Ansprüche, **dadurch gekennzeichnet, dass**, falls das Resultat des Vergleichs des Anstiegs mit den Merkmalen des AGR-Ventils zeigt, dass der Anstieg mit dem AGR-Ventil nicht für mindestens einen Teil der stabilisierten Betriebspunkte erzielt werden kann, und falls die Änderung der stabilisierten Betriebspunkte nicht möglich ist, ein AGR-Ventil definiert wird, das Anstiegseigenschaften hat, die mit dem bestimmten Anstieg kompatibel sind.

5. Verfahren nach einem der vorhergehenden Ansprüche, **dadurch gekennzeichnet, dass** die maximalen zulässigen Variationen $\Delta Q_{egr}$ mit Hilfe einer Gleichung des folgenden Typs bestimmt werden:

$$\Delta Q_{egr} = \Delta Q_{air}\left(-1 + \frac{\gamma a}{\gamma a - 1}\frac{P_2}{P_2^*}\frac{Q_{air} + Q_{egr}}{Q_{air}}\frac{rc-1}{rc}\left(\frac{1}{1+14,38\phi}\frac{2+rt}{2-rt} - \frac{r_c\left(1 + \frac{PdC}{P_2}\frac{\gamma a-1}{\gamma a}\right)-1}{rc-1}\right)\right)$$

in der:

$$rc = \left(\frac{P_2}{P_1}\right)^{\frac{\gamma a-1}{\gamma a}}$$ das Verhältnis des stromabwärtigen und stromaufwärtigen Drucks der Verdichtungsstufe des

Turboverdichters ist, $\gamma$ das Verhältnis der spezifischen Wärme bei konstantem Druck und konstantem Volumen ist,

$$rt = \left(\frac{P_4}{P_3}\right)^{\frac{\gamma e - 1}{\gamma e}}$$ das Verhältnis des stromabwärtigen und stromaufwärtigen Drucks der Turbine des Turbo-

kompressors ist,

$\gamma_a$ und $\gamma_e$ jeweils die Verhältnisse der spezifischen Wärme der Luft und des Abgases sind,

$\Phi$ Die Reichhaltigkeit des Luft-Kraftstoffgemischs für den betreffenden stabilisierten Betriebspunkt ist, $Q_{air}$ und $Q_{egr}$ jeweils der Luftdurchsatz und der AGR-Durchsatz für den betreffenden stabilisierten Punkt sind,

PdC der Wert der Lastverluste zwischen dem Ausgang des Verdichters und dem Verteiler (darunter der Wärmeaustauscher) ist und daher gleich $P_2 - P_2''$ ist, $P_2'' - P_2$ jeweils der Druck in dem Einlassverteiler und am Ausgang des Verdichters sind.

6. Verfahren nach einem der vorhergehenden Ansprüche, **dadurch gekennzeichnet, dass** die zulässigen Wirkquerschnittvariationen $\Delta Seff$ des AGR-Ventils mit Hilfe einer Gleichung des folgenden Typs bestimmt werden:

$$\frac{\Delta Q_{egr}}{Q_{egr}}\left(1 - 2k\frac{PdC_{Aval}}{P_2'' + PdC_{Aval}} + 2(1-k)\frac{PdC_{Amont}}{P_3 - PdC_{Amont}}\right) - k\frac{\Delta P_2''}{P_2'' + PdC_{Aval}} - (1-k)\frac{\Delta P_3}{P_3 - PdC_{Amont}} = \frac{\Delta S_{eff}}{S_{eff}}$$

in der

$$rv = \left(\frac{P_2'' + PdC_{Aval}}{P_3 - PdC_{Amont}}\right)^{\frac{\gamma e - 1}{\gamma e}}$$ das Verhältnis des stromabwärtigen und stromaufwärtigen Drucks der AGR-Schleife ist,

$$k = \frac{2 - (\gamma e + 1)rv}{2\gamma e(1-r)v}$$ eine Zwischenvariable ist,

$PdC_{Aval}$ und $PdC_{Amont}$ jeweils die Lastverluste stromabwärts und stromaufwärts der AGR-Schleife sind, $\Delta P_2''$ und $\Delta P_3$ jeweils die Variationen der Drücke $P''_2$ und $P_3$ sind, die durch eine Variation des Wirkquerschnitts der AGR-Schleife veranlasst werden, wobei $P''_2$ der Druck in dem Einlassverteiler ist und $P_3$ der Druck stromaufwärts der Turbine des Turboverdichters ist.

7. Verfahren nach einem der vorhergehenden Ansprüche, **dadurch gekennzeichnet, dass** der Schritt des Vergleichens des Anstiegs mit den Merkmalen des AGR-Ventils durch Vergleichen von zwei Kurven erfolgt, die die Wirkquerschnittvariationen $\Delta Seff$ in Abhängigkeit von dem Wirkquerschnitt Seff darstellen, wobei eine der Kurven aus dem Bedarf resultiert, der bei der Konzeption des Motors in Abhängigkeit von den Betriebspunkten ausgedrückt wird, und die andere Kurve aus dem Wirkquerschnitt Seff in Abhängigkeit von der Position des Aktuators des Ventils resultiert.

8. Verfahren nach einem der vorhergehenden Ansprüche, **dadurch gekennzeichnet, dass** die Werte von $Q_{air}$ und $Q_{egr}$ und maximalen zulässigen Variationen des Luftdurchsatzes $\Delta Q_{air}$, die mit mindestens einer Einheit der stabilisierten Betriebspunkte assoziiert sind, durch Kalibrieren des Motors oder bei der Konzeption des Motors bestimmt werden.

9. Verfahren nach Anspruch 8, **dadurch gekennzeichnet, dass** die Werte von $Q_{air}$, $Q_{egr}$ und maximaler zulässiger Variationen des Luftdurchsatzes $\Delta Q_{air}$ in Abhängigkeit von den Betriebsmodi des Motors bestimmt werden.

10. Verfahren nach Anspruch 9, **dadurch gekennzeichnet, dass** die Werte von $Q_{air}$, $Q_{egr}$ und maximaler zulässiger Variationen des Luftdurchsatzes $\Delta Q_{air}$ in Abhängigkeit von mindestens einem der folgenden Motorparameter bestimmt werden: von der Drehzahl, der Last und der Temperatur.

**Claims**

1. A method tending to render the flow of air $Q_{air}$ entering the cylinders of a heat engine (10), provided with an EGR loop (20) including an EGR valve (36), insensitive in relation to variations $\Delta$Qegr of the gas flow Qegr passing through the EGR valve due to variations of the pressure difference at the terminals of the EGR valve being able to lead to variations in the richness of the mixture injected in the cylinders, and therefore to variations in engine torque and polluting emissions, method according to which points of stabilised operation of the engine are defined as a function of predetermined needs, values of $Q_{air}$, $Q_{egr}$ and maximum admissible variations of air flow $\Delta Q_{air}$ being associated with at least one set of said points of stabilised operation, said method being **characterized by** the following steps:

- determining the maximum admissible variations $\Delta Q_{egr}$ for at least a portion of said points of stabilised operation,
- determining the admissible effective section variations $\Delta$Seff of the EGR valve as a function of said maximum admissible variations $\Delta Q_{egr}$,
- estimating the performance of the control of the EGR loop;
- determining the necessary progressivity of the EGR valve, the progressivity being equal to the gradient of the curve representing the effective section as a function of the position of the shutter of the EGR valve;
- comparing said progressivity with the characteristics of said EGR valve, and
- if the result of said comparison of said progressivity with the characteristics of said EGR valve shows that said progressivity can not be obtained with said EGR valve for at least a portion of the points of stabilised operation, the points of stabilised operation of said portion are then modified in such a way as to obtain a correlation between said progressivity and the characteristics of said EGR valve.

2. The method according to Claim 1, **characterized in that** said needs concern the fuel consumption, the admissible limits of polluting emissions and the driving comfort.

3. The method according to Claim 2, **characterized in that** said polluting emissions concern at least one of the following pollutants: a nitrogen oxide NOx and particles.

4. The method according to one of the preceding claims, **characterized in that**, if the result of said comparison of said progressivity with the characteristics of said EGR valve shows that said progressivity can not be obtained with said EGR valve for at least a portion of the points of stabilised operation and if the modification of the points of stabilised operation is not possible, an EGR valve is defined having properties of progressivity compatible with said determined progressivity.

5. The method according to one of the preceding claims, **characterized in that** said maximum admissible variations $\Delta Q_{egr}$ are determined by means of an equation of the type:

$$\Delta Q_{egr} = \Delta Q_{air}\left( -1 + \frac{\gamma a}{\gamma a - 1}\frac{P_2}{P_2^{''}}\frac{Q_{air} + Q_{egr}}{Q_{air}}\frac{rc - 1}{rc}\left( \frac{1}{1 + 14,38\phi}\frac{2 + rt}{2 - rt} - \frac{r_c\left(1 + \dfrac{PdC}{P_2}\dfrac{\gamma a - 1}{\gamma a}\right) - 1}{rc - 1} \right) \right)$$

in which:

$$rc = \left(\frac{P_2}{P_1}\right)^{\frac{\gamma a - 1}{\gamma a}}$$

is the ratio of the downstream and upstream pressures of the compression stage of the turbocharger, $\gamma$ being the ratio of the specific heats at constant pressure and at constant volume,

$$rt = \left( \frac{P_4}{P_3} \right)^{\frac{\gamma e - 1}{\gamma e}}$$

is the ratio of the downstream and upstream pressures of the turbine of the turbocharger,

$\gamma_a$ and $\gamma_e$ are respectively the ratios of specific heat of the air and of the exhaust gas,
$\Phi$ is the richness of the air/fuel mixture for the point of stabilised operation concerned, $Q_{air}$ and $Q_{egr}$ are respectively the flows of air and of EGR for the stabilised point concerned,
PdC is the value of the drops in pressure between the outlet of the compressor and the distributor (including the exchanger), and therefore equal to $P_2 - P_2''$,.
$P_2''$ and $P_2$ are respectively the pressures in the intake distributor and at the outlet of the compressor.

6. The method accoridng to one of the preceding claims, **characterized in that** said admissible effective section variations $\Delta Seff$ of the EGR valve are determined by means of an equation of the type:

$$\frac{\Delta Q_{egr}}{Q_{egr}} \left( 1 - 2k \frac{PdC_{Aval}}{P_2'' + PdC_{Aval}} + 2(1-k) \frac{PdC_{Amont}}{P_3 - PdC_{Amont}} \right) - k \frac{\Delta P_2''}{P_2'' + PdC_{Aval}} - (1-k) \frac{\Delta P_3}{P_3 - PdC_{Amont}} = \frac{\Delta S_{eff}}{S_{eff}}$$

in which:

$$rv = \left( \frac{P_2'' + PdC_{Aval}}{P_3 - PdC_{Amont}} \right)^{\frac{\gamma e - 1}{\gamma e}}$$

is the ratio of the downstream (Aval) and upstream (Amont) pressures of the EGR loop,

$$k = \frac{2 - (\gamma e + 1)rv}{2\gamma e(1 - r)v}$$

is an intermediate variable,

$PdC_{Aval}$ and $PdC_{Amont}$ are respectively the pressure drops downstream and upstream of the EGR loop,
$\Delta P_2''$ and $\Delta P_3$ are respectively the variations of the pressures $P''_2$ and $P_3$ caused by an effective section variation of the EGR loop, $P''_2$ being the pressure in the intake distributor and $P_3$ being the pressure upstream of the turbine of the turbocharger.

7. The method according to one of the preceding claims, **characterized in that** said step of comparison of said progressivity with the characteristics of said EGR valve is carried out by comparison of two curves representing the effective section variations $\Delta Seff$ as a function of the effective section Seff, one of said curves resulting from the need expressed during the design of the engine as a function of said points of operation, and the other curve resulting from the effective section Seff as a function of the position of the actuator of said valve.

8. The method according to one of the preceding claims, **characterized in that** said values of $Q_{air}$, $Q_{egr}$ and of maximum admissible variations of air flow $\Delta Q_{air}$ associated with at least one set of said points of stabilised operation are determined by calibration of the engine or during the design of the engine.

9. The method according to Claim 8, **characterized in that** said values of $Q_{air}$, $Q_{egr}$ and of maximum admissible variations of air flow $\Delta Q_{air}$ are determined as a function of the modes of operation of the engine.

10. The method according to Claim 9, **characterized in that** said values of $Q_{air}$, $Q_{egr}$ and of maximum admissible variations of air flow $\Delta Q_{air}$ are determined as a function of at least one of the following parameters of the engine: the speed, the load and the temperature.

**Figure 1**

**Figure 2**

**Figure 3**

**Figure 4**

**Figure 5**

Besoin Consommation, Emission, Agrément = f(Régime, Couple) ⟶ 52

Besoins QAir, Qegr, ΔQair = f(Régime, Couple) ⟶ 54

Identification des points de fonctionnement Turbocompresseur, Boucle EGR ⟶ 56

Dispersions connues (Admission,...) ⟶ 57

Identification des variations limites ΔQAir et ΔQEGR = f(Régime, Couple) — 58

Estimation de la performance du contrôle de la Boucle EGR — 62

Conception de la boucle EGR — 66

Identification des variations limites ΔS$_{ef}$ = f(Régime, Couple) — 60

86

Détermination de la Progressivité — 64

70

Caractérisation de la boucle EGR — 68

84

PHASE 1

Ou

PHASE 2

**Figure 6**

ΔSeff(cm²) vs Seff(cm²)

**Figure 7**

**Figure 8**

**Figure 9**

**Figure 10**

**EP 2 531 713 B1**

**RÉFÉRENCES CITÉES DANS LA DESCRIPTION**

**Documents brevets cités dans la description**

- FR 1050807
- US 2007209362 A1
- FR 2872220